# EUROPEAN PATENT SPECIFICATION

(11) **EP 2 942 096 B1**
(45) Date of publication and mention of the grant of the patent: **13.06.2018**
(21) Application number: 15165245.0
(22) Date of filing: 27.04.2015
(51) Int. Cl.: B01D 19/02, B01D 53/50, C02F 1/74, C02F 1/40, C02F 101/20, C02F 103/08, C02F 103/18

(54) **ANTIFOAM DEVICE AND METHOD OF USE FOR SEAWATER FOAM CONTROL**
ANTISCHAUMVORRICHTUNG UND VERFAHREN ZUR VERWENDUNG ZUR MEERWASSERSCHAUMKONTROLLE
DISPOSITIF ANTIMOUSSE ET SON PROCÉDÉ D'UTILISATION POUR LA RÉGULATION DE LA MOUSSE DE L'EAU DE MER

(30) Priority: 08.05.2014 US 201414272599
(43) Date of publication of application: 11.11.2015
(73) Proprietor: General Electric Technology GmbH, 5400 Baden (CH)
(72) Inventor: Tabikh, Ali Mustapha, 352 53 Vaxjo (SE); Lundin, Lars Filip, 362 52 Jat (SE); Papsai, Pal, 352 63 Vaxjo (SE); Bolmgren, Stig Arne Nicklas, 35 595 Tävelsäs (SE)
(74) Representative: General Electric Technology GmbH

(56) References cited:
- WO-A1-2013/042197
- US-A- 181 668
- US-A- 3 284 993

## Description

### Field of the Invention

The present disclosure is directed to an antifoam device for removing foam generated during treatment of seawater contained in a seawater aeration basin associated with a seawater based flue gas desulfurization system.

The present disclosure is further directed to a method of using an antifoam device to remove foam generated during treatment of seawater contained in a seawater aeration basin associated with a seawater based flue gas desulfurization system.

### Background of the Invention

Process gases containing sulfur dioxide, SO₂, are generated in many industrial processes. One such industrial process is combustion of a fuel such as coal, oil, peat, waste, or the like, in a combustion plant such as a power plant. In such a power plant, a hot process gas often referred to as a flue gas, is generated. The generated flue gas contains pollutants such as for example acid gases, such as for example sulfur dioxide, SO₂. It is necessary to remove as much of the generated acid gases as possible from the flue gas before emitting the flue gas into ambient air. Another example of an industrial process that generates a process gas containing pollutants is electrolytic production of aluminum from alumina. In that process, a process gas or flue gas containing sulfur dioxide, SO₂, is generated within venting hoods of electrolytic cells. Similarly, it is necessary to remove as much of the generated sulfur dioxide, SO₂, as possible from the flue gas before emitting the flue gas into ambient air.

WO 2008/105212 discloses a boiler system comprising a boiler, a steam turbine system, and a seawater scrubber for flue gas desulfurization. The boiler generates, by combustion of a fuel, high-pressure steam utilized in the steam turbine system to generate electric power. Seawater is collected from the ocean, and is utilized as a cooling medium in a condenser of the steam turbine system. Afterward, the seawater is utilized in the seawater based flue gas desulfurization scrubber to absorb sulfur dioxide, SO₂, from flue gas generated in the boiler. Sulfur dioxide, SO₂, absorbed by the seawater upon contact therewith in the seawater based flue gas desulfurization scrubber forms sulfite and/or bisulfite ions. Effluent seawater from the seawater based flue gas desulfurization scrubber is forwarded to a seawater aeration basin for treatment. In the seawater aeration basin, air is bubbled through the effluent seawater forwarded from the seawater based flue gas desulfurization scrubber for oxidation of sulfite and/or bisulfite ions to sulfate ions. The sulfite and/or bisulfite ions therein are so oxidized to sulfate ions by means of oxygen gas contained in the bubbled air. The resulting inert sulfate ions in the treated effluent seawater may then be released back to the ocean.

US 181 668 describes an antifoam device comprising a housing equipped with an inlet for suctioned foam and an outlet for air, a spray system operable to spray a fluid within the housing toward at least one perforated plate arranged across an interior area of the housing and a drain duct in fluid communication with a bottom of the interior area operational for draining a fluid from the interior area.

WO 2013/042197 A2 describes an apparatus for trapping foam comprising an air lift device that has an upper opening dam at the upper end of an introducing channel, a pumping channel connected to the introducing channel, the pumping channel spans from within the seawater to above the seawater surface and an air blowing means that delivers air into the lower part of the pumping channel.

From US 3 284 993 an antifoam device is known that comprises a centrifugal blower that draws in foam and air and induces centrifugal separation of the liquid in the foam to cause collaps of the foam.

One problem associated with effluent seawater treatment in a seawater aeration basin is foam generation on the surface of the effluent seawater. Generation of foam in seawater aeration basins requires construction of larger basins to contain not only the effluent seawater but also the generated foam. Construction of larger basins means larger capital, maintenance and operational outlays. Another problem, at the present time foam generated on the surface of the effluent seawater is typically released directly back to the ocean. However, generated foam often times carries a relatively high concentration of heavy metals unsuitable for release back to the ocean. With these problems in mind, an antifoam device for controlling seawater foam levels in effluent seawater aeration basins is needed to reduce associated capital, maintenance and/or operational expenses, and to reduce or prevent the release of heavy metals into the ocean. Likewise, a method of using an antifoam device for controlling seawater foam levels in effluent seawater aeration basins is needed to reduce associated capital, maintenance and/or operational expenses, and to reduce or prevent the release of heavy metals into the ocean.

### Summary of the Invention

An object of the present disclosure is to provide an antifoam device for controlling generated foam levels on the surface of effluent seawater. Effluent seawater is generated in the removal of sulfur dioxide from a flue gas by contacting the flue gas containing sulfur dioxide with seawater in a scrubber constructed for such purpose. The effluent seawater generated in the scrubber is then treated in a seawater aeration basin. The above-stated objective is achieved through the subject antifoam device useful for controlling generated foam levels on the surface of effluent seawater contained in a seawater aeration basin. The subject antifoam device is operated using a fan such as a portable fan, an aeration fan, or the like with a high pressure side, i.e., the blower side, and a low pressure side, i.e., the suction side. Using the low pressure side of the fan, generated foam is sucked from the surface of the effluent seawater undergoing treatment in the seawater aeration basin into the subject antifoam device. Sucking foam from the surface of the effluent seawater reduces foam levels in, or eliminates foam contained by, the seawater aeration basin. Use of the aeration fan already used to blow air through the seawater aeration basin to aerate effluent seawater contained therein for the subject purpose of suctioning foam, is less preferable than using a smaller sized fan. Use of a smaller sized fan is preferred, as the aeration fan may provide more suction than is needed for operation of the subject antifoam device. However, by suctioning generated foam from the surface of the seawater, the overall size of the seawater aeration basin may be reduced thereby reducing costs associated therewith. Once removed from the surface of the seawater, generated foam is destroyed in the subject antifoam device. Fluid produced by the destruction of the suctioned foam in the subject antifoam device is then collected, stored and/or treated prior to environmentally conservative disposal thereof.

An advantage of the subject antifoam device is that the stated environmental objectives are achieved while also decreasing capital, maintenance and/or operational expenses associate therewith. Using the low pressure side of a portable fan, an aeration fan or the like, results in minimal high pressure blower efficiency loss. Likewise, in most applications, generated foam level control is achieved with antifoam device operation in a non- continuous mode. Operating the antifoam device in a non-continuous mode likewise reduces any fan efficiency losses attributed thereto, again reducing associated costs. Furthermore, by eliminating or controlling generated foam levels in the seawater aeration basin, the overall size of the seawater aeration basin may be reduced, thus reducing associated capital, maintenance and/or operational expenditures attributable thereto.

Another object of the present disclosure is to provide a method for controlling generated foam levels on the surface of effluent seawater. Effluent seawater is generated in the removal of sulfur dioxide from a flue gas by contacting the flue gas containing sulfur dioxide with seawater in a flue gas desulfurization scrubber constructed for such purpose. Effluent seawater generated in the seawater flue gas desulfurization scrubber is then treated in a seawater aeration basin. The above-stated objective is achieved by controlling foam levels generated on the surface of effluent seawater contained in a seawater aeration basin through a method of using the subject antifoam device. As such, the low pressure side, i.e., the suction side, of a portable fan, the aeration fan, or the like, is used to suction generated foam from the surface of the effluent seawater and into the subject antifoam device for destruction therein. Fluid produced by foam destruction is then collected, stored and/or treated prior to environmentally conservative disposal thereof. By eliminating or controlling levels of generated foam on the surface of effluent seawater in the seawater aeration basin, the overall size of the seawater aeration basin may be reduced, thus reducing associated capital, maintenance and/or operational expenditures attributable thereto.

An advantage is that this method achieves the stated objective with minimal added operational and/or capital expenses associate therewith. Using the low pressure side of a portable fan, an aeration fan, or the like, results in minimal high pressure blower efficiency loss. Likewise, in most applications, generated foam level control is achieved operating the subject antifoam device in accordance with the subject method in a non- continuous mode. Operating in a non-continuous mode likewise reduces any fan efficiency losses attributed thereto, again reducing associated costs.

In summary, the subject disclosure provides a foam control system comprising a seawater aeration basin fluidly connected to a first aeration fan operable to blow air, or an oxygen containing gas, into effluent seawater contained in the seawater aeration basin. A second fan such as a portable fan or the like is operable to suction generated foam from a surface of the effluent seawater contained in the seawater aeration basin into an antifoam device. Use of the first aeration fan already used to blow air through the seawater aeration basin to aerate effluent seawater contained therein, is less preferable for use with the subject antifoam device than another smaller sized second fan, such as a portable fan. Use of the first aeration fan with the subject antifoam device may possibly create more suction than is needed for operation thereof.

The subject antifoam device comprises a housing defining an interior area. The housing is equipped with a suctioned foam inlet for flow of suctioned foam into the interior area of the housing and an air outlet for flow of air out of the interior area of the housing. The housing also includes a spray system comprising piping in fluid communication with a fluid supply. Also in fluid communication with the piping are one or more apertures or nozzles operable for spraying fluid from the piping/fluid supply within the housing. As such, the sprayed fluid from the apertures or nozzles is directed toward a surface of at least one perforated plate arranged across the interior area of the housing. The at least one perforated plate divides the interior area of the housing into an inlet area and an outlet area. Optionally, the at least one perforated plate may be in the form of one or more screens with like or differing mesh sizes. A mist eliminator is arranged in fluid communication with the outlet area operable for reducing at least a portion of an amount of moisture entrained in air flowing from the air outlet. A drain duct is arranged in fluid communication with a bottom of the interior area of the housing operational for fluid drainage from the interior area of the housing.

In using the subject antifoam device and system, foam from the surface of the effluent seawater is suctioned by the low pressure side of a portable fan, an aeration fan, or the like, into the interior area of the housing. Within the housing, suctioned foam is destroyed by fluid sprayed from one or more apertures or nozzles toward the at least one perforated plate, which blocks the flow of suctioned foam within the interior area of the housing. Optionally, the at least one perforated plate may be in the form of one or more screens with like or differing mesh sizes. Destruction of the suctioned foam produces fluid and air. Sprayed fluid and produced fluid are drained from the interior area of the housing via the drain duct. Produced air flows from the interior area of the housing via the air outlet. In operating the subject antifoam device, use of the low pressure side of the fan to suction generated foam may be conducted on a continuous, scheduled periodic, detector initiated "as-needed" periodic or other non-continuous basis.

The subject disclosure likewise provides a method for foam control comprising providing a seawater aeration basin fluidly connected to an aeration fan operable to blow air, or an oxygen containing gas, into an effluent seawater contained in the seawater aeration basin. A fan such as a portable fan, the aeration fan or the like is operable to suction generated foam from a surface of the effluent seawater contained in the seawater aeration basin. Generated foam suctioned from the surface of the effluent seawater is suctioned into the subject antifoam device. Within the subject antifoam device, the suctioned generated foam is destroyed. To achieve suctioned generated foam destruction, the subject antifoam device comprises a housing defining an interior area. The housing is equipped with a foam inlet for flow of suctioned generated foam into the interior area and an air outlet for flow of air out of the interior area. The housing also includes a spray system including piping fluidly connected to a fluid supply. The piping is also fluidly connected to one or more apertures or nozzles operable to spray fluid from the fluidly connected fluid supply within interior area of the housing toward at least one perforated plate arranged across the interior area of the housing. The perforated plate is arranged so as to divide the interior area of the housing into an inlet area and an outlet area. Optionally, the at least one perforated plate may be in the form of one or more screens with like or differing mesh sizes. A mist eliminator is arranged in fluid communication with the outlet area for capture of moisture entrained in air flowing from the interior area via the air outlet. A drain duct is also in fluid communication with a bottom of the interior area of the housing. As such, the drain duct is operational for draining fluid from the interior area of the housing. In use, suctioned generated foam is destroyed in the interior area of the housing by a spray of fluid sprayed from the apertures or nozzles of the spray system directed toward the at least one perforated plate blocking the flow of suctioned generated foam through the interior area of the housing. The suctioned generated foam entering the interior area of the housing may comprise heavy metals. Fluid produced by the destruction of suctioned generated foam may also comprise heavy metals. Fluids produced by the destruction of suctioned generated foam are thereby collected via the drain duct for treatment, as needed. Further according to the subject method, use of the low pressure side of a fan to suction generated foam may be conducted on a continuous, scheduled periodic, detector initiated "as-needed" periodic or other non-continuous basis.

A method of using the subject antifoam device comprises suctioning generated foam from a surface of effluent seawater contained in a seawater aeration basin into the subject antifoam device. Suctioned generated foam within the antifoam device is destroyed by fluid spray contact by a fluid sprayed from one or more apertures or nozzles fluidly connected to piping and a fluid supply. Fluid sprayed within an interior area of the antifoam device is directed toward at least one perforated plate arranged across the interior area of the antifoam device housing, blocking the flow of suctioned generated foam therein. Optionally, the at least one perforated plate may be in the form of one or more screens with like or differing mesh sizes. Suctioned generated foam within the antifoam device may comprise heavy metals. Fluid produced by generated foam destruction may likewise comprise heavy metals. Fluid produced by the destruction of suctioned generated foam is drained from the antifoam device via a fluidly connected drain duct. Fluid drained from the antifoam device may be collected, stored and/or treated as needed prior to environmentally conservative disposal thereof. Further according to the subject method, use of the low pressure side of a fan to suction generated foam from the surface of effluent seawater may be conducted on a continuous, scheduled periodic, detector initiated "as-needed" periodic or other non-continuous basis.

A method for controlling foam comprising heavy metals comprises providing a seawater aeration basin fluidly connected to an aeration fan operable to blow air, or an oxygen containing gas, into effluent seawater contained in the seawater aeration basin for aeration of the effluent seawater therein. A fan such as a portable fan, the aeration fan or the like is operable to suction off generated foam comprising heavy metals such as mercury from a surface of the effluent seawater contained in the seawater aeration basin. Suctioning off foam from the surface of the effluent seawater using the low pressure side of a fan may be conducted on a continuous, scheduled periodic, detector initiated "as-needed" periodic or other non-continuous basis. Further, a fluid collection tank may optionally be used for collection, storage and/or treatment of fluid produced by destruction of the suctioned generated foam, possibly comprising heavy metals such as mercury. As such, suctioned generated foam, possibly comprising heavy metals such as mercury, is suctioned from the surface of the effluent seawater and destroyed in the subject antifoam device. Since fluid produced by the destruction of the suctioned generated foam in the subject antifoam device may likewise comprise heavy metals such as mercury, the produced fluid may be collected, stored and/or treated in the fluid collection tank for removal of at least a portion of any heavy metals therein prior to environmentally conservative disposal thereof. Alternatively, the produced fluid may be collected and optionally stored for a time in the fluid collection tank prior to transport for treatment elsewhere in the power plant or offsite.

Further objects and features of the present disclosure will be apparent from the following description and claims.

### Brief description of the Drawings

The invention will now be disclosed in more detail with reference to the appended drawings described below.
Figure 1 is a schematic side cross-section view of a power plant with apparatus according to the present disclosure.
Figure 2 is a schematic enlarged side cross-section view of the seawater based flue gas desulfurization system seawater aeration basin equipped with the subject antifoam device and system according to FIGURE 1.
Figure 3 is a schematic enlarged side cross-section view of the antifoam device according to FIGURE 2.
Figure 4 is a schematic enlarged "inlet area" front view of the perforated plate according to FIGURE 3.

### Detailed Description

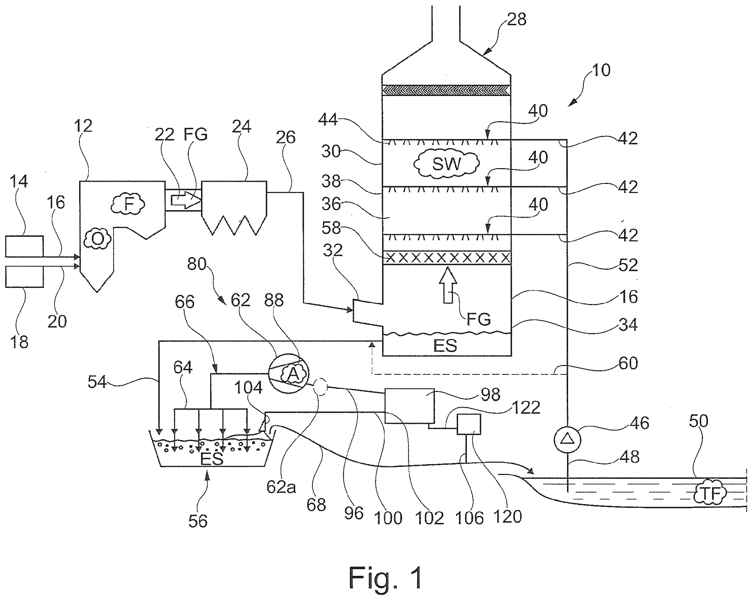

Figure 1 is a schematic side cross-section view illustrating a power plant 10. The power plant 10 comprises a boiler 12 to which a fuel F, such as coal, oil, or the like, is supplied from a fuel source 14 through a fluidly connected feeding pipe 16 to boiler 12 for combustion therein. Fuel F is combusted in boiler 12 in the presence of oxygen O, supplied to boiler 12 via a fluidly connected oxygen supply duct 20 from an oxygen source 18. The oxygen O supplied to boiler 12 may, for example, be supplied in the form of air, and/or in the form of a mixture of oxygen gas and recirculated power plant flue gas FG. In such a case, boiler 12 would be what is commonly called an "oxy-fuel" boiler. The combustion of the fuel F generates a hot process gas in the form of a flue gas FG. Sulphur species contained in fuel F, upon combustion of the fuel F, form sulphur dioxide, SO₂. As such, power plant 10 flue gas FG includes as a portion thereof sulphur dioxide.

Produced flue gas FG flows from the boiler 12, via a fluidly connected duct 22, to a particulate collection device 24, in the form of a fabric filter or electrostatic precipitator. The particulate collection device 24, such as an electrostatic precipitator as described in US 4,502,872, serves to remove dust and/or ash particles entrained in the flue gas FG. Alternatively, a fabric filter such as that described in US 4,336,035, may be used for particulate collection of flue gas dust and/or ash from the flue gas FG. As an alternate embodiment, particulate collection device 24 may be arranged downstream of a seawater based flue gas desulfurization system 28. As still another embodiment, particulate collection device 24 may be eliminated from the system with particulate removal occurring solely in the seawater based flue gas desulfurization system 28.

According to the present embodiment illustrated in Figure 1, the flue gas FG from which most of the ash and/or dust particles have been removed, flows from the particulate collection device 24 via a fluidly connected duct 26 to a seawater based flue gas desulfurization system 28. The seawater based flue gas desulfurization system 28 comprises a wet scrubber tower or absorber 30. An inlet 32 is arranged at a lower portion 34 of the absorber 30. The duct 26 is fluidly connected to the inlet 32, such that flue gas FG flowing from particulate collection device 24 via duct 26 may enter interior 36 of absorber 30 via inlet 32.

After entering interior 36, flue gas FG flows vertically upward through absorber 30, as indicated by arrow FG. Central portion 38 of absorber 30 is equipped with a number of spray arrangements 40 arranged vertically one above each other. For purposes of simplicity in the embodiment illustrated in Figure 1, there are three such spray arrangements 40. Typically, there are 1 to 20 such spray arrangements 40 in an absorber 30. Each spray arrangement 40 comprises a supply pipe 42 and a number of nozzles 44 fluidly connected to the respective supply pipe 42. Seawater SW supplied via the respective supply pipes 42 to the nozzles 44 is atomized by means of the nozzles 44 to contact in interior 36 of absorber 30 flue gas FG flowing therethrough. As such, contact between the seawater SW and flue gas FG enables seawater SW absorption of sulphur dioxide, SO₂, from the flue gas FG within interior 36 of absorber 30.

A pump 46 is arranged for pumping seawater SW via fluidly connected suction pipe 48 from a seawater supply or ocean 50, through a fluidly connected pressure pipe 52 and further through fluidly connected to supply pipes 42.

In accordance with an alternative embodiment, seawater SW pumped by pump 46 to supply pipes 42 may be seawater SW previously utilized as cooling water in steam turbine systems (not shown) associated with the boiler 12 prior to supplying such seawater SW to absorber 30.

In accordance with an alternative embodiment, the seawater based flue gas desulfurization system 28 may comprise one or more layers of a packing material 58 arranged in interior 36 of absorber 30. The packing material 58, which may be made from plastic, steel, wood, or another suitable material, enhances gas-liquid contact. With packing material 58, the nozzles 44 would merely distribute seawater SW over packing material 58, rather than atomizing the seawater SW for contact with the flue gas FG. Examples of packing material 58 include Mellapak™ available from Sulzer Chemtech AG, Winterthur, CH, and Pall™ rings available from Raschig GmbH, Ludwigshafen, DE.

Seawater SW atomized by nozzles 44 in interior 36 of absorber 30 flows downwardly in absorber 30 for contact and absorption of sulphur dioxide from the flue gas FG flowing vertically upwardly in interior 36 of absorber 30. Absorption of sulphur dioxide by the seawater SW in interior 36 forms effluent seawater ES collected in lower portion 34 of absorber 30. Effluent seawater ES collected in lower portion 34 of absorber 30 is drained or flows via a fluidly connected effluent pipe 54 to seawater aeration basin 56.

Optionally, if needed, fresh seawater SW may be added to the effluent seawater ES flowing through effluent pipe 54 to seawater aeration basin 56. To this end, an optional pipe 60 may be fluidly connected to pressure pipe 52 to supply a flow of fresh seawater SW to fluidly connected effluent pipe 54 forwarding effluent seawater ES to seawater aeration basin 56. Hence, an intermixing of fresh seawater SW and effluent seawater ES may occur in effluent pipe 54. As another optional alternative (not illustrated), the fresh seawater SW supplied via pipe 60 may be forwarded directly to the seawater aeration basin 56 to mix with the effluent seawater ES therein. As a still further option (not illustrated), residual waters and/or condensates generated in the boiler 12 or steam turbine systems (not shown) associated therewith could be mixed with the effluent seawater ES in the seawater aeration basin 56.

The absorption of sulphur dioxide in interior 36 of absorber 30 is assumed to occur according to the following reaction:

SO₂ (g) + H₂O = > HSO₃⁻ (aq) + H⁺ (aq) [eq. 1.1a]

The bisulphite ions, HSO₃⁻, may, depending on the pH value of the effluent seawater ES, dissociate further to form sulphite ions, SO₃²⁻, in accordance with the following equilibrium reaction:

HSO₃⁻ (aq) <=> SO₃²⁻ (aq) + H⁺ (aq) [eq. 1.1b]

Hence, as an effect of the absorption of sulfur dioxide, the effluent seawater ES will have a lower pH value as an effect of the hydrogen ions, H⁺, generated in the absorption of sulfur dioxide, than that of the fresh seawater SW from the ocean 50, and will contain bisulphite and/or sulphite ions, HSO₃⁻ and SO₃²⁻ , respectively. Bisulphite and/or sulphite ions are oxygen demanding substances, and the release thereof to the ocean 50 is restricted.

In the seawater aeration basin 56, the bisulphite and/or sulphite ions, HSO₃⁻ and/or SO₃²⁻, are oxidized by reacting the same with oxygen in accordance with the following reactions:

HSO₃⁻ + H⁺ + ½ O₂ (g) = > SO₄²⁻ + 2H⁺ [eq. 1.2a]

SO₃²⁻ + 2H⁺ + ½ O₂ (g) = > SO₄²⁻ + 2H⁺ [eq. 1.2b]

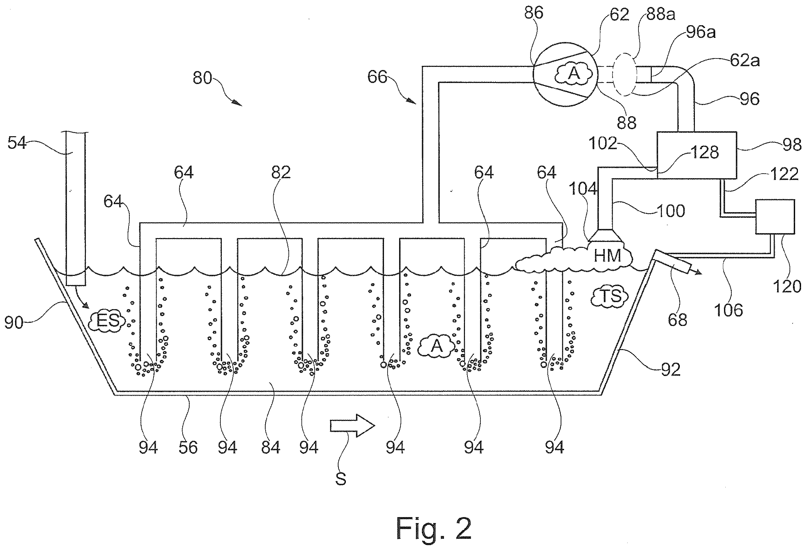

The seawater aeration basin 56 includes an aeration fan 62 operative for blowing, via fluidly connected ductwork 64, an oxygen containing gas or air A into the effluent seawater ES contained therein. The aeration fan 62 and fluidly connected ductwork 64 together form an oxygen supply system 66 for supplying the oxygen containing gas or air A to the effluent seawater ES in the seawater aeration basin 56. A more detailed description of the seawater aeration basin 56 is provided hereinafter with reference to Figure 2.

Figure 2 illustrates the seawater aeration basin 56 in more detail. Effluent seawater ES is supplied to the seawater aeration basin 56 portion of seawater treatment system 80via fluidly connected effluent pipe 54 at a first end 90, being an inlet end of seawater aeration basin 56. The effluent seawater ES flows, generally horizontally as indicated by arrow S, from the first end 90 to a second end 92, being an outlet end of seawater aeration basin 56. As effluent seawater ES flows from the first end 90 to second end 92, a foam HM is generated on a surface 82 of effluent seawater ES near second end 92. Foam HM may carry a relatively high concentration of heavy metals such as mercury and the like. At the second end 92, treated effluent seawater TS overflows from seawater aeration basin 56 via fluidly connected overflow pipe 68.

Aeration system 80 further includes the oxygen supply system 66 with aeration fan 62 and ductwork 64. The ductwork 64 comprises a number of outlets 94 within interior 84 of seawater aeration basin 56. Aeration fan 62 blows the oxygen containing gas or air A through ductwork 64 for release from outlets 94 below effluent seawater ES surface 82 in seawater aeration basin 56. The ductwork 64 extends along the seawater aeration basin 56, between the first end 90 and the second end 92 thereof. The oxygen containing gas or air A blown by high pressure side 86 of aeration fan 62 and released from outlets 94 mixes with the effluent seawater ES in seawater aeration basin 56. As such, the oxygen containing gas or air A is dispersed in and mixed with effluent seawater ES to oxidize bisulphite and/or sulphite ions present therein to form inert sulfates in treated seawater TS prior to environmental release of the treated seawater TS via overflow pipe 68 into ocean 50.

As noted above, effluent seawater ES flows, generally horizontally as indicated by arrow S, from the first end 90 to the second end 92, being an outlet end of seawater aeration basin 56. As effluent seawater ES flows from the first end 90 to second end 92 foam HM is generated on surface 82 of effluent seawater ES by turbulence and aeration. As a result of effluent seawater ES flowing from the first end 90 to second end 92 foam HM builds or collects near second end 92. Foam HM may carry a relatively high concentration of heavy metals such as mercury and the like.

To prevent foam HM from building on surface 82 or flowing from seawater aeration basin 56 via overflow pipe 68 into ocean 50, low pressure side 88, i.e., the suction side, of aeration fan 62 is fluidly connected via suction duct 96 to an antifoam device 98. Alternatively, the seawater aeration basin 56 is fluidly connected to a first aeration fan 62 operable to blow air A, or an oxygen containing gas, into effluent seawater ES contained in the seawater aeration basin 56. A second fan 62a, illustrated by dashed lines, such as a portable fan or the like is operable having a low pressure side 88a to suction generated foam HM from a surface of the effluent seawater ES contained in the seawater aeration basin 56 into an antifoam device 98. Use of the first aeration fan 62 already used to blow air A through the seawater aeration basin 56 to aerate effluent seawater ES contained therein, is less preferable for use with the subject antifoam device 98 than another smaller sized second fan 62a, such as a portable fan. Use of the first aeration fan 62 with the subject antifoam device 98 may possibly create more suction than is needed for operation thereof. For this reason, using the low pressure side 88a of a separate smaller type fan 62a such as a portable fan is preferred, as aeration fan 62 may create more suction than necessary for operation of the subject antifoam device 98. Also fluidly connected to antifoam device 98 is foam duct 100. Foam duct 100 fluidly connects to foam inlet 128 of antifoam device 98 via foam duct 100 duct outlet 102. Opposite duct outlet 102 of foam duct 100 is foam duct inlet 104. Foam duct inlet 104 of foam duct 100 is preferably of an enlarged size as compared to foam duct 100 and operable to remove via suction from aeration fan 62 or portable fan 62a generated foam HM from surface 82. Generated foam HM suctioned from surface 82 flows into foam inlet 128 of antifoam device 98 for destruction therein, as described in greater detail below. Suction of generated foam HM from surface 82 using aeration fan 62 or portable fan 62a may be conducted on a continuous, scheduled periodic, detector initiated "as-needed" periodic or like non-continuous basis controlled by opening or closing of valve 96a in suction duct 96.

Generated foam HM suctioned into antifoam device 98 is destroyed producing a fluid PF. The produced fluid PF may be collected, stored and/or treated in a fluid collection tank 120 fluidly connected via drain duct 122 to fluidly connected antifoam device 98. As such, produced fluid PF collected in fluid collection tank 120 via drain duct 122 may be treated as needed to remove at least a portion of the potentially relatively high concentration of heavy metals therein prior to release of the produced fluid PF to the ocean 50 or otherwise. As such, treated produced fluid TF may be released from the fluid collection tank 120 via a fluidly connected treated fluid pipe 106 fluidly connected to overflow pipe 68 for return of treated produced fluid TF to the ocean 50.

Alternatively, produced fluid PF collected in fluid collection tank 120 may be transported to additional power plant 10 equipment (not shown) for removal of at least a portion of the potentially relatively high concentration of heavy metals therein prior to release of the generated treated produced fluid TF or use of the treated produced fluid TF elsewhere in the power plant 10 or offsite.

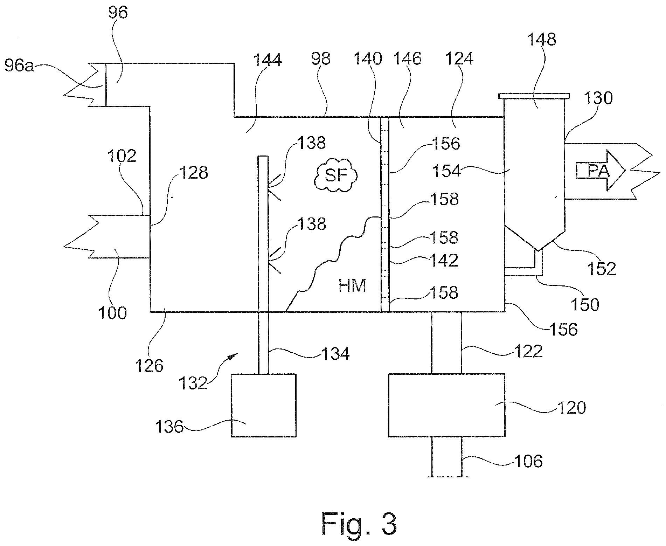

Best illustrated in Figure 3 is the subject antifoam device 98. Antifoam device 98 comprises a housing 124 defining an interior area 126. The housing 124 is equipped with a suctioned foam HM inlet 128 for flow of suctioned foam HM into the interior area 126 of the housing 124 and an air outlet 130 for flow of air PA out of the interior area 126 of the housing 124. The housing 124 also includes a spray system 132 comprising piping 134 in fluid communication with a fluid supply 136. Fluid supply 136 may be in the form of a tank, a piped fluid source such as water, or other suitable source for fluid such as water storage and/or supply. Also in fluid communication with the piping 134 are one or more apertures or nozzles 138 operable for spraying fluid SF from the piping/fluid supply within the housing 124. As such, the sprayed fluid SF from the apertures or nozzles 138 is directed toward an inlet surface 140 of at least one perforated plate 142 arranged across the interior area 126 of the housing 124. The at least one perforated plate 142 divides the interior area 126 of the housing 124 into an inlet area 144 and an outlet area 146. Optionally, the at least one perforated plate 142 may be in the form of one or more screens with like or differing mesh sizes. A mist eliminator 148 is arranged in fluid communication with the outlet area 146 operable for reducing at least a portion of an amount of moisture entrained in air and produced air PA flowing out the air outlet 130. A mist duct 150 is arranged in fluid communication with a bottom 152 of the mist eliminator 148. Moisture removed from the air and the produced air PA flowing out the air outlet 130 is drained via mist duct 150 from interior 154 of mist eliminator 148 and into fluidly connected outlet area 146 of housing 124. Further, a drain duct 122 is arranged in fluid communication with a bottom 156 of the interior area 126 of the housing 124 operational for fluid drainage from the interior area 126 of the housing124. In using the subject antifoam device 98, foam HM from the surface 82 of the effluent seawater ES is suctioned by the low pressure side 88, 88a of a fan such as a portable fan 62a, the aeration fan 62, or the like, into the interior area 126 of the housing 124. Within the housing 124, suctioned foam HM is destroyed by fluid SF sprayed from the one or more apertures or nozzles138 toward the at least one perforated plate 142, which blocks the flow of suctioned foam HM within the interior area 126 of the housing 124. Destruction of the suctioned foam HM produces fluid PF and air PA. Sprayed fluid SF and produced fluid PF are drained from the interior area 126 of the housing 124 via the drain duct 122. Produced air PA flows from the interior area 126 of the housing 124 via the air outlet 130. In operating the subject antifoam device 98, use of the low pressure side 88, 88a of a fan such as a portable fan 62a, the aeration fan 62, or the like, to suction generated foam HM may be conducted on a continuous, scheduled periodic, detector initiated "as-needed" periodic or other non-continuous basis controlled by valve 96a in suction duct 96. Valve 96a may be opened or closed to operate or not operate, respectively, antifoam device 98.

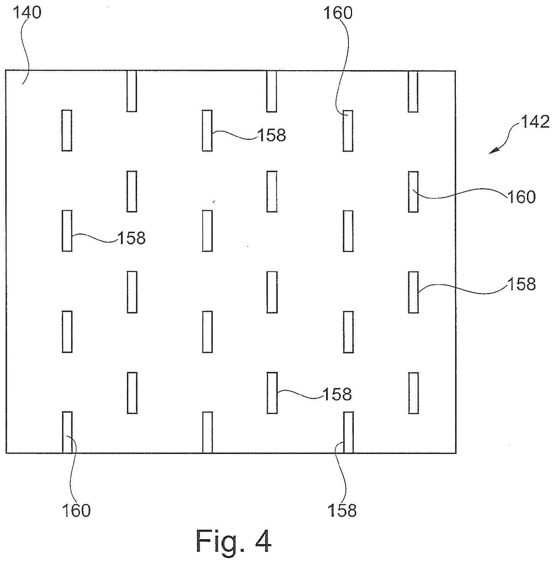

As best illustrated in Figure 4, is a front foam inlet 128 view of inlet surface 140 of perforated plate 142. Perforated plate 142 is preferably planar for ease of construction. However, non-planar shapes such as curved would also be suitable for perforated plate 142 for use in the subject antifoam device 98. Optionally, the at least one perforated plate 142 may be in the form of one or more screens with like or differing mesh sizes. The function of perforated plate 142 is to block the flow of generated foam HM within interior area 126 of housing 124. The blocked foam HM is contacted and destroyed by fluid SF sprayed from apertures or nozzles 138. Air PA and fluid PF produced by the destruction of generated foam HM flows through a plurality of perforations 158 that perforate perforated plate 142. Perforations 158 extend through perforated plate 142 from inlet surface 140 to opposed outlet surface 156. Perforations 158 define open area 160 in perforated plate 142. Perforated plate 142 is preferably approximately 50 percent to approximately 75 percent, or approximately 75 percent to approximately 90 percent open area 160, to ensure adequate air, produced air PA, and produced fluid PF flow through antifoam device 98 while blocking the flow of generated foam HM from flow therein. Further, antifoam device 98 may include more than one perforated plate 142. In the case of antifoam device 98 being equipped with more than one perforated plate 142, the shape and the percentage of open area 160 of each perforated plate 142 may be the same or differ in order to optimize fluid flow while blocking generated foam HM flow.

In summary, the subject disclosure provides a device 98 and method for controlling levels of foam HM, possibly comprising heavy metals, generated on the surface 82 of effluent seawater ES during aeration of the effluent seawater ES in a seawater based flue gas desulfurization system 28 associated seawater aeration basin 56. As such, a seawater aeration basin 56 containing effluent seawater ES is in fluid connection to an aeration fan 62 operable to blow an oxygen containing gas or air A into the effluent seawater ES in the seawater aeration basin 56 for aeration of the effluent seawater therein. The aeration fan 62, a portable fan 62a, or the like, is likewise operable to suction foam HM from a surface 82 of effluent seawater ES in the seawater aeration basin 56. Suction of foam HM from the surface 82 of the effluent seawater ES using the aeration fan 62, portable fan 62a, or the like, may be conducted on a continuous, scheduled periodic, detector initiated "as-needed" periodic or other non-continuous basis. A fluid collection tank 120 is used for collection, storage and/or optionally treatment of fluid SF/produced fluid PF from the antifoam device 98, as needed. As the suctioned generated foam may comprise heavy metals such as mercury, the produced fluid PF from the antifoam device 98 may likewise comprise heavy metals. Fluid SF/produced fluid PF drained from antifoam device 98 into fluid collection tank 120 may be treated therein or elsewhere to remove at least a portion of heavy metals therefrom. Alternatively, fluid SF/produced fluid PF may be stored for a time in the fluid collection tank 120 prior to and/or after treatment thereof. Alternatively, fluid SF/produced fluid PF may be collected and optionally stored for a time in the fluid collection tank 120 prior to transport thereof for treatment elsewhere in the power plant 10 or offsite.

The subject method for controlling foam HM comprising heavy metals comprises providing a seawater aeration basin 56 fluidly connected to an aeration fan 62 operable to blow an oxygen containing gas or air A into effluent seawater ES for aeration of the effluent seawater ES in the seawater aeration basin 56. A fan such as a portable fan, 62a, the aeration fan 62, or the like is operable to suction foam HM comprising heavy metals such as mercury from a surface 82 of effluent seawater ES in the seawater aeration basin 56. Suctioning of foam HM from the surface 82 of the effluent seawater ES using a fan 62, 62a may be conducted on a continuous, scheduled periodic, detector initiated "as-needed" periodic or other non-continuous basis. A fluid collection tank 120 is used for collection, storage and/or optionally treatment of the suctioned foam HM comprising heavy metals such as mercury, suctioned from the surface 82 of the effluent seawater ES. As the suctioned foam HM comprises heavy metals such as mercury, treatment of fluid SF/produced fluid PF drained from antifoam device 98 into the fluid collection tank 120 comprises removing at least a portion of heavy metals therefrom. For this purpose, fluid SF/produced fluid PF drained from the antifoam device 98 may be stored for a time in the fluid collection tank 120 prior to and/or after treatment thereof. Alternatively, the fluid SF/produced fluid PF may be collected and optionally stored for a time in the fluid collection tank 120 prior to transport of the fluid SF/produced fluid PF for treatment elsewhere in the power plant 10 or offsite.

## Claims

1. A system (80) comprising
a seawater based flue gas desulfurization system (28);
a seawater aeration basin (56) associated with said seawater based flue gas desulfurization system (28), for the treatment of effluent seawater (ES) contained therein;
a fan (62), wherein a high pressure side (86) of said fan (62) is fluidly connected to said seawater aeration basin (56) and is operable to blow an oxygen containing gas (A) into effluent seawater (ES) in the seawater aeration basin (56), and an antifoam device (98)
**characterized in that**
a low pressure side (88, 88a) of said fan (62) or of a separate second fan (62a) is operable to suction foam (HM) from a surface (82) of effluent seawater (ES) in the seawater aeration basin (56) into said antifoam device (98), and **in that** the antifoam device (98) comprises:
a housing (124) equipped with an inlet (128) for suctioned foam and an outlet (130) for air (PA),
at least one perforated plate (142) arranged across an interior area (126) of the housing (124) dividing the interior area (126) into an inlet area (144) and an outlet area (146), said at least one perforated plate (142) being arranged to block foam (HM) flow;
a spray system (132) operable to spray fluid, within the housing (124), toward said at least one perforated plate (142) to destroy foam (HM) suctioned into the interior area (126) of the housing (124) from the surface (82) of the effluent seawater (ES), by contact between said foam (HM) and said sprayed fluid;
a mist eliminator (148) arranged in fluid communication with the outlet area (146), operable for reducing at least a portion of an amount of moisture entrained in the air (PA) flowing out of the air outlet (130); and
a drain duct (122) in fluid communication with a bottom (156) of the interior area (126) operational for draining fluid from the antifoam device (98).

2. The system (80) according to claim 1, having said separate second fan (62a) having its low pressure side (88a) operable to suction foam (HM) from the surface (82) of effluent seawater (ES) in the seawater aeration basin (56) into said antifoam device (98).

3. A method for the control of foam generated during the treatment of effluent seawater (ES) contained in a seawater aeration basin (56) associated with a seawater based flue gas desulfurization system (28), said method using the system of claim 1 or 2 and comprising the steps of:
blowing an oxygen containing gas (A) in the seawater aeration basin (56) using the high pressure side (86) of the fan (62) fluidly connected to said seawater aeration basin (56) so as to treat said effluent seawater (ES);
suctioning foam (HM) from a surface (82) of the effluent seawater (ES) in the seawater aeration basin (56) into the interior area (126) of the antifoam device (98) using the low pressure side (88, 88a) of the fan (62) or a separate fan (62a);
spraying fluid within the housing (124), toward at least one perforated plate (142), using the spray system (132), so that foam (HM) in the interior area (126) of the antifoam device (98) is destroyed by contact with said sprayed fluid;
reducing at least a portion of an amount of moisture entrained in the air (PA) flowing out the air outlet (130) of the antifoam device (98) using the mist eliminator (148); and
draining fluid from the antifoam device (98) using the drain duct (122) of the antifoam device (98).

4. The method according to claim 3, wherein suction of foam (HM) is conducted on scheduled periodic, detector initiated "as-needed" periodic or other noncontinuous basis.

5. The method according to claim 3, wherein suction of foam (HM) is conducted on a continuous basis.

## Patentansprüche

1. Ein System (80), umfassend
ein Rauchgasentschwefelungssystem auf Meerwasserbasis (28);
ein mit dem Rauchgasentschwefelungssystem auf Meerwasserbasis (28) verbundenes Meerwasserbelüftungsbecken (56) für die Behandlung von darin enthaltenem Abfluss-Meerwasser (ES);
ein Gebläse (62), wobei eine Hochdruckseite (86) des Gebläses (62) in Fluidverbindung mit dem Meerwasserbelüftungsbecken (56) steht und funktionsfähig ist, ein sauerstoffhaltiges Gas (A) in Abfluss-Meerwasser (ES) in dem Meerwasserbelüftungsbecken (56) zu blasen, und eine Entschäumungsvorrichtung (98),
**dadurch gekennzeichnet, dass**
eine Niederdruckseite (88, 88a) des Gebläses (62) oder eines getrennten zweiten Gebläses (62a) funktionsfähig ist, Schaum (HM) von einer Oberfläche (82) von Abfluss-Meerwasser (ES) in dem Meerwasserbelüftungsbecken (56) in die Entschäumungsvorrichtung (98) zu saugen, und dass die Entschäumungsvorrichtung (98) umfasst:
ein Gehäuse (124), das einen Einlass (128) für abgesaugten Schaum und einen Auslass (130) für Luft (PA) aufweist,
wenigstens eine Lochplatte (142), die durch einen Innenbereich (126) des Gehäuses (124) angeordnet ist und den Innenbereich (126) in einen Einlassbereich (144) und einen Auslassbereich (146) teilt, wobei die wenigstens eine Lochplatte (142) dafür gestaltet ist, Fluss von Schaum (HM) zu blockieren;
ein Sprühsystem (132), das funktionsfähig ist, innerhalb des Gehäuses (124) Fluid zu der wenigstens einen Lochplatte (142) zu sprühen, um von der Oberfläche (82) des Abfluss-Meerwassers (ES) in den Innenbereich (126) des Gehäuses (124) gesaugten Schaum (HM) durch Kontakt zwischen dem Schaum (HM) und dem versprühten Fluid zu zerstören;
einen Tropfenabscheider (148), der in Fluidverbindung mit dem Auslassbereich (146) angeordnet ist und der funktionsfähig ist, wenigstens einen Teil einer Menge von in der aus dem Luftauslass (130) fließenden Luft (PA) mitgeführten Feuchte zu verringern; und
eine Ablaufleitung (122) in Fluidverbindung mit einem Boden (156) des Innenbereichs (126), die funktionsfähig ist, Fluid aus der Entschäumungsvorrichtung (98) abzulassen.

2. Das System (80) gemäß Anspruch 1, das das getrennte zweite Gebläse (62) aufweist, dessen Niederdruckseite (88a) funktionsfähig ist, Schaum (HM) von der Oberfläche (82) von Abfluss-Meerwasser (ES) in dem Meerwasserbelüftungsbecken (56) in die Entschäumungsvorrichtung (98) zu saugen.

3. Ein Verfahren zum Beherrschen von Schaum, der bei der Behandlung von Abfluss-Meerwasser (ES) entsteht, das in einem mit dem Rauchgasentschwefelungssystem auf Meerwasserbasis (28) verbundenen Meerwasserbelüftungsbecken (56) enthalten ist,
wobei das Verfahren das System gemäß Anspruch 1 oder 2 verwendet und die Schritte umfasst:
Blasen eines sauerstoffhaltigen Gases (A) in das Meerwasserbelüftungsbecken (56) unter Verwendung der Hochdruckseite (86) des Gebläses (62), die in Fluidverbindung mit dem Meerwasserbelüftungsbecken (56) steht, um das Abfluss-Meerwasser (ES) zu behandeln;
Absaugen von Schaum (HM) von einer Oberfläche (82) des Abfluss-Meerwassers (ES) in dem Meerwasserbelüftungsbecken (56) in den Innenbereich (126) der Entschäumungsvorrichtung (98) unter Verwendung der Niederdruckseite (88, 88a) des Gebläses (62) oder eines getrennten Gebläses (62a);
innerhalb des Gehäuses (124) Sprühen von Fluid zu wenigstens einer Lochplatte (142) unter Verwendung des Sprühsystems (132), so dass Schaum (HM) in dem Innenbereich (126) der Entschäumungsvorrichtung (98) durch Kontakt mit dem versprühten Fluid zerstört wird;
Verringern wenigstens einer Teils einer Menge von in der aus dem Luftauslass (130) der Entschäumungsvorrichtung (98) fließenden Luft (PA) mitgeführten Feuchte unter Verwendung des Tropfenabscheiders (148); und
Ablassen von Fluid aus der Entschäumungsvorrichtung (98) unter Verwendung der Ablaufleitung (122) der Entschäumungsvorrichtung (98).

4. Das Verfahren gemäß Anspruch 3, wobei Absaugen von Schaum (HM) auf einer planmäßig periodischen, detektorausgelösten "bedarfsweise" periodischen oder einer anderen nichtkontinuierlichen Basis durchgeführt wird.

5. Das Verfahren gemäß Anspruch 3, wobei Absaugen von Schaum (HM) auf einer kontinuierlichen Basis durchgeführt wird.

## Revendications

1. Système (80) comprenant :
un système de désulfuration des effluents gazeux faisant appel à de l'eau de mer (28) ;
une cuve d'aération d'eau de mer (56) associée audit système de désulfuration des effluents gazeux faisant appel à de l'eau de mer (28), servant au traitement d'effluents d'eau de mer (ES) se trouvant dans celui-ci ;
un ventilateur (62),
un côté haute pression (86) dudit ventilateur (62) étant en liaison fluidique avec ladite cuve d'aération d'eau de mer (56) et pouvant être mis en oeuvre pour projeter un gaz contenant de l'oxygène (A) dans les effluents d'eau de mer (ES) dans la cuve d'aération d'eau de mer (56), et
un dispositif anti-écume (98),
**caractérisé en ce que**
un côté basse pression (88, 88a) dudit ventilateur (62) ou d'un second ventilateur distinct (62a) peut être mis en oeuvre pour aspirer l'écume (HM) depuis la surface (82) des effluents d'eau de mer (ES) dans la cuve d'aération d'eau de mer (56) et
l'envoyer dans ledit dispositif anti-écume (98),
et **en ce que** le dispositif anti-écume (98) comprend :
un boîtier (124) pourvu d'une entrée (128) pour l'écume aspirée et d'une sortie (130) pour l'air (PA),
au moins une plaque perforée (142) disposée en travers d'une région intérieure (126) du boîtier (124) divisant la région intérieure (126) en une région d'entrée (144) et une région de sortie (146), ladite ou lesdites plaques perforées (142) étant conçues pour bloquer un écoulement d'écume (HM) ;
un système de pulvérisation (132) pouvant être mis en oeuvre pour pulvériser un fluide, à l'intérieur du boîtier (124), en direction de ladite ou
desdites plaques perforées (142) de façon à éliminer l'écume (HM) aspirée dans la région intérieure (126) du boîtier (124) depuis la surface (82) des effluents d'eau de mer (ES), par le contact entre ladite écume (HM) et ledit fluide pulvérisé ;
un dévésiculeur (148) disposé en communication fluidique avec la région de sortie (146), pouvant être mis en oeuvre pour réduire au moins une partie d'une quantité d'eau entraînée dans l'air (PA) s'écoulant à partir de la sortie d'air (130) ; et
un conduit d'évacuation (122) en communication fluidique avec un fond (156) de la région intérieure (126) apte à évacuer le fluide depuis le dispositif anti-écume (98).

2. Système (80) selon la revendication 1, comportant ledit second ventilateur distinct (62a) dont le côté basse pression (88a) peut être mis oeuvre pour aspirer l'écume (HM) depuis la surface (82) des effluents d'eau de mer (ES) dans la cuve d'aération d'eau de mer (56) pour l'envoyer dans ledit dispositif anti-écume (98).

3. Procédé de régulation de l'écume générée au cours du traitement d'effluents d'eau de mer (ES) se trouvant dans une cuve d'aération d'eau de mer (56) associée à un système de désulfuration des effluents gazeux faisant appel à de l'eau de mer (28), ledit procédé employant le système selon la revendication 1 ou 2 et comprenant les étapes suivantes :
projeter un gaz oxygéné (A) dans la cuve d'aération d'eau de mer (56) au moyen du côté haute pression (86) du ventilateur (62) en liaison fluidique avec ladite cuve d'aération d'eau de mer (56) de façon à traiter lesdits effluents d'eau de mer (ES) ;
aspirer l'écume (HM) depuis une surface (82) des effluents d'eau de mer (ES) dans la cuve d'aération d'eau de mer (56) et l'envoyer dans la région intérieure (126) dudit dispositif anti-écume (98) au moyen du côté basse pression (88, 88a) du ventilateur (62) ou d'un ventilateur distinct (62a) ;
pulvériser un fluide, à l'intérieur du boîtier (124), en direction d'au moins une plaque perforée (142), au moyen du système de pulvérisation (132), de façon à ce que l'écume (HM) dans la région intérieure (126) du dispositif anti-écume (98) soit éliminée par le contact avec ledit fluide pulvérisé ;
réduire au moins une partie d'une quantité d'eau entraînée dans l'air (PA) s'écoulant à partir de la sortie d'air (130) du dispositif anti-écume (98) au moyen du dévésiculeur (148) ; et
évacuer le fluide depuis le dispositif anti-écume (98) au moyen du conduit d'évacuation (122) du dispositif anti-écume (98).

4. Procédé selon la revendication 3, dans lequel l'aspiration de l'écume (HM) est effectuée d'une manière périodique programmée, d'une manière périodique *ad hoc* avec déclenchement par détecteur ou d'une autre manière non continue.

5. Procédé selon la revendication 3, dans lequel l'aspiration de l'écume (HM) est effectuée de manière continue.
